# EUROPÄISCHE PATENTSCHRIFT

(11) **EP 3 349 961 B1**
(45) Veröffentlichungstag und Bekanntmachung des Hinweises auf die Patenterteilung: **24.11.2021**
(21) Anmeldenummer: 16767275.7
(22) Anmeldetag: 19.09.2016
(51) Int. Cl.: B29C 48/30, B29C 48/13, B29C 48/09, B29C 48/88, B29C 48/25, B29C 49/00

(54) **VORRICHTUNG ZUM HERSTELLEN VON KUNSTSTOFFROHREN**
DEVICE FOR PRODUCING PLASTIC TUBING
DISPOSITIF DE FABRICATION DE TUYAUX EN PLASTIQUE

(30) Priorität: 18.09.2015 DE 102015115828
(43) Veröffentlichungstag der Anmeldung: 25.07.2018
(73) Patentinhaber: UNICOR GmbH, 97437 Hassfurt (DE)
(72) Erfinder: HOFMANN, Günther, 97437 Hassfurt-Augsfeld (DE); NEUBAUER, Gerhard, 97486 Königsberg-Römershofen (DE)
(74) Vertreter: Louis Pöhlau Lohrentz
(86) Internationale Anmeldenummer: PCT/EP2016/072206
(87) Internationale Veröffentlichungsnummer: WO 2017/046421

(56) Entgegenhaltungen:
- EP-A1- 0 087 854
- EP-A1- 1 897 671
- DE-A1-102008 023 178
- DE-C1- 3 930 318

## Beschreibung

Die Erfindung betrifft eine Vorrichtung zum Herstellen von Kunststoffrohren nach dem Oberbegriff des Anspruchs 1.

Eine derartige Vorrichtung zum Herstellen von Kunststoffrohren ist z.B. in den Druckschriften EP 0087854 A1, DE 102008023178 A1, DE 39 30318 C1, EP 1897671 A1 und

WO 2004/052 624 A1 beschrieben. Die in der Druckschrift WO 2004/052 624 A1 beschriebene Vorrichtung weist einen Extruder mit Spritzkopf und einen Korrugator auf, in den über den Spritzkopf ein Kunststoffschmelzeschlauch zum Ausformen des Kunststoffrohres eingeleitet wird. Der Korrugator weist eine Formstrecke auf, in der Formbacken paarweise in Produktionsrichtung geführt werden. In einem Einlaufabschnitt des Korrugators werden die Formbacken zu Formbackenpaaren zum Anfang der Formstrecke zusammengeführt. In einem Auslaufabschnitt des Korrugators werden die Formbackenpaare vom Ende der Formstrecke auseinander geführt. In einem zwischen dem Einlaufabschnitt und dem Auslaufabschnitt angeordneten Zwischenabschnitt des Korrugators ist die Formstrecke zur Führung der Formbackenpaare ausgebildet und eine Rückführung ausgebildet, in der die Formbacken vom Ende der Formstrecke zum Anfang der Formstrecke rückgeführt werden. Aus dieser Druckschrift und aus DE 102 57 363 C1 ist bereits bekannt, dass zur Kühlung der Formflächen in den Formbackenhälften ein Kühlkanal ausgebildet ist, wobei jede Formbackenhälfte einen Kühlmediumzulauf und einen Kühlmediumablauf aufweist die an der Grundfläche der Formbackenhälften münden.

Aufgabe der vorliegenden Erfindung ist es, eine hinsichtlich der Temperierung der Formbacken verbesserte Vorrichtung der vorgenannten Art zu schaffen.

Erfindungsgemäß wird diese Aufgabe mit dem Gegenstand des Anspruchs 1 gelöst. Die Grundidee der Erfindung ist es, eine stationäre Führungs- und/oder Temperiereinrichtung zu schaffen, die mit den Formbacken zusammenwirkt. Bei dem Gegenstand des Anspruchs 1 handelt es sich um eine Vorrichtung zum Herstellen von Kunststoffrohren. Sie weist einen Extruder mit Spritzkopf und einen Korrugator auf, in den über den Spritzkopf ein Kunststoffschmelzeschlauch zum Ausformen des Kunststoffrohres eingeleitet wird. Die Vorrichtung sieht vor, dass der Korrugator eine Formstrecke aufweist, in der Formbacken paarweise in Produktionsrichtung geführt werden. Ferner sieht die Vorrichtung vor, dass in einem Einlaufabschnitt des Korrugators die Formbacken zu Formbackenpaaren zum Anfang der Formstrecke zusammengeführt werden.

Weiter sieht die Vorrichtung vor, dass in einem Auslaufabschnitt des Korrugators die Formbackenpaare vom Ende der Formstrecke auseinander geführt werden, und dass in einem zwischen dem Einlaufabschnitt und dem Auslaufabschnitt angeordneten Zwischenabschnitt des Korrugators die Formstrecke zur Führung der Formbackenpaare ausgebildet ist und eine Rückführung ausgebildet ist, in der die Formbacken vom Ende der Formstrecke zum Anfang der Formstrecke rückgeführt werden.

Die Vorrichtung sieht eine ortsfeste Führungseinrichtung zur Führung der Formbacken vor. Wesentlich bei der erfindungsgemäßen Lösung ist,
a) dass die Führungseinrichtung eine stationäre Führungs- und/oder Temperierkörpereinrichtung aufweist,
b) dass die Führungs- und/oder Temperierkörpereinrichtung eine von Temperiermittel durchströmbare Temperiermittel-Kanaleinrichtung aufweist,
c) dass die Führungs- und/oder Temperierkörpereinrichtung eine Führungs- und/oder Temperierflächeneinrichtung aufweist, die der Außenseite der passierenden Formbacken unter Wärmeübertragung zugewandt ist,
d) dass in der Führungs- und/oder Temperierflächeneinrichtung der Führungs- und/oder Temperierkörpereinrichtung Erhebungen und/oder Vertiefungen aufweisende Führungsausnehmungen und/oder ebene Führungsflächen ausgebildet sind, die mit korrespondierenden Führungsausnehmungen und/oder Führungsflächen der passierenden Formbacken zusammenwirken,
e) dass die Führungs- und/oder Temperierkörpereinrichtung so ausgebildet ist, dass die in der Formstrecke passierenden Formbackenpaare und/oder die in der Rückführung passierenden Formbacken an ihrer Außenseite zumindest teilweise überdeckt werden, wobei die Formbackenpaare bzw. die Formbacken vorzugsweise in flächigem Kontakt mit der Führungs- und/oder Temperierkörpereinrichtung entlang gleiten, wobei der Formbacken innenliegend in dem Körper der Formbacken ausgebildete Zahnleisten aufweist, die seitlich nicht über den Grundkörper der Formbacken überstehen, wobei die nach innen liegenden Zahnleisten auf der Außenseite der Formbacken am oberen und unteren Bereich der Formbacken ausgebildet sind.

Die Temperiermittel-Kanaleinrichtung wird durch ein vorzugsweise fluides Temperiermittel durchströmt, wodurch die vorzugsweise stationäre Führungs- und/oder Temperierkörpereinrichtung eine vorbestimmte Temperatur und Temperaturverteilung erhält. Die Formbacken, die die Führungs- und/oder Temperierkörpereinrichtung passieren, werden dabei derart temperiert, dass die Formflächen der Formbacken die angestrebte Temperatur und über die Formfläche vorzugsweise konstante Temperaturverteilung erhalten.

Eine besonders vorteilhafte Temperierung mittels des Temperiermittels ist mit Ausführungen möglich, die vorsehen, dass die Führungs- und/oder Temperiermittel-Kanaleinrichtung parallele Temperiermittelkanäle aufweist, die sich durch die Führungs- und/oder Temperierkörpereinrichtung hindurch erstrecken.

Was die Temperiermittel-Kanaleinrichtung betrifft, kann auch vorgesehen sein, dass die Führungs- und/oder Temperiermittel-Kanaleinrichtung in der Führungs- und/oder Temperierkörpereinrichtung derart angeordnet und ausgestaltet ist, dass die Formfläche der passierenden Formbacken und/oder Formbackenpaare eine über die gesamte Formfläche gleichmäßige Temperaturverteilung erhält.

Eine besonders effektive Führung der Formbacken wird erhalten, wenn vorgesehen ist, dass die Erhebungen und/oder Vertiefungen aufweisenden Führungsausformungen der Führungs- und/oder Temperierkörpereinrichtungen vorzugsweise als Führungsstifte und/oder Führungsnasen ausgebildet sind und/oder als Führungsvertiefungen, vorzugsweise Führungsnuten ausgebildet sind; und dass die Erhebungen und/oder Vertiefungen aufweisenden Führungsausformungen der Formbacken Führungsausformungen der Führungs- und/oder Temperierkörpereinrichtung sind.

Ein besonders kompakter Aufbau mit optimierter Wärmeübertragung und Führung wird mit Ausführungen erhalten, die vorsehen, dass die Führungs- und/oder Temperierkörpereinrichtung so ausgebildet ist, dass die in der Formstrecke passierenden Formbackenpaare und/oder die in der Rückführung passierenden Formbacken an ihrer Außenseite zumindest teilweise überdeckt werden, wobei die Formbackenpaare bzw. die Formbacken vorzugsweise in flächigem Kontakt mit der Führungs- und/oder Temperierkörpereinrichtung entlang gleiten. In bevorzugter Weiterbildung kann vorgesehen sein, dass die Führungs- und/oder Temperierkörpereinrichtung in der Formstrecke an der oberen Außenseite der passierenden Formbackenpaare und an der unteren Außenseite der passierenden Formbackenpaare und an der einen seitlichen Außenseite und an der anderen seitlichen Außenseite der passierenden Formbackenpaare angeordnet ist und dadurch die passierenden Formbackenpaare an vier Längsseiten überdeckt. Was die Rückführung betrifft, kann auch vorgesehen sein, dass die Führungs- und/oder Temperierkörpereinrichtung in der Rückführung der Formbacken an der oberen Außenseite der Formbacken und an der unteren Außenseite der Formbacken angeordnet ist und an der seitlichen Außenseite der Formbacken angeordnet ist, die der Formfläche der jeweiligen Formbacken abgewandt angeordnet ist, d.h. die Formbacken nur an drei Seiten überdeckt.

Es kann vorgesehen sein, dass die Führungs- und/oder Temperierkörpereinrichtung aus mehreren Führungs- und/oder Temperierkörpern ausgebildet ist, die die passierenden Formbackenpaare mehrseitig umschließen.

Es kann vorgesehen sein, dass an der oberen Außenseite der in der Formstrecke passierenden Formbackenpaare ein Führungs- und/oder Temperierkörper angeordnet ist, und/oder dass an der unteren Außenseite der in der Formstrecke passierenden Formbackenpaare mindestens ein Führungs- und/oder Temperierkörper angeordnet ist, und/oder dass an der einen seitlichen Außenseite der in der Formstrecke passierenden Formbackenpaare ein Führungs- und/oder Temperierkörper angeordnet ist, und/oder dass an der anderen Außenseite der in der Formstrecke passierenden Formbackenpaare ein Führungs- und/oder Temperierkörper angeordnet ist.

Ein praktikabler Aufbau der Führungs- und/oder Temperierkörpereinrichtung wird erhalten, wenn vorgesehen ist, dass die Führungs- und/oder Temperierkörpereinrichtung aus mehreren in Führungsrichtung axial hintereinander auf Stoß angeordneten Führungs- und/oder Temperierkörpern ausgebildet ist und/oder aus mehreren quer zur Führungsrichtung nebeneinander angeordneten Führungs- und/oder Temperierkörpern gebildet ist. In bevorzugter Weiterbildung kann vorgesehen sein, dass jeder Führungs- und/oder Temperierkörper auf der den passierenden Formbacken und/oder den passierenden Formbackenpaaren zugewandten Seite jeweils eine Führungs- und/oder Temperierfläche aufweist.

Im Sinne einer effektiven Führung der passierenden Formbacken und Formbackenpaare an oder in der Führungs- und/oder Temperierkörpereinrichtung kann vorgesehen sein, dass die Führungs- und/oder Temperierfläche der Führungs- und/oder Temperierkörper Führungsausformungen aufweist, die als Führungserhebungen und/oder Führungsvertiefungen ausgebildet sind.

Es kann vorgesehen sein, dass die Führungserhebungen an den Formbacken als Führungsstifte und die Führungsvertiefungen an den Führungs- und/oder Temperierkörpern als Führungsnuten ausgebildet sind, in die die Führungsstifte eingreifen.

Es kann vorgesehen sein, dass die Führungserhebungen und/oder Führungsvertiefungen im Bereich zwischen zwei in Querrichtung benachbarten Temperierkörpern ausgebildet sind.

Es kann vorgesehen sein, dass in jedem Führungs- und/oder Temperierkörper der Führungs- und/oder Temperierkörpereinrichtung jeweils mindestens ein Temperiermittelkanal ausgebildet ist. In bevorzugter Weiterbildung kann vorgesehen sein, dass in dem Führungs- und/oder Temperierkörper mehrere parallele Temperiermittelkanäle ausgebildet sind.

Im Sinne einer Optimierung der Temperierung kann bei bevorzugten Ausführungen vorgesehen sein, dass der Temperiermittelkanal über seinen axialen Verlauf einen konstanten Querschnitt aufweist oder einen variierenden Querschnitt aufweist.

Um axial benachbarte Führungs- und/oder Temperierkörper insbesondere mit demselben Temperiermittelkreislauf zu temperieren, kann vorgesehen sein, dass axial benachbarte Führungs- und/oder Temperierkörper auf Stoß angeordnet sind und eine Kupplungseinrichtung aufweisen, die einen Temperiermittel-Verbindungskanal aufweist, über den der mindestens eine Temperiermittelkanal des einen Führungs- und/oder Temperierkörpers mit dem mindestens einen Temperiermittelkanal des anderen Temperierkörpers verbindbar ist. In bevorzugter Weiterbildung kann vorgesehen sein, dass die Kupplungseinrichtung als plattenförmiger Körper ausgebildet ist, in dem der Temperiermittel-Verbindungskanal ausgebildet ist.

Es kann vorgesehen sein, dass im Bereich eines Führungs- und/oder Temperierkörpers eine Vakuumeinrichtung oder ein Teil einer Vakuumeinrichtung angeordnet ist, die mit einer externen Vakuumversorgung verbunden oder verbindbar ist, und an einer Anschlusseinrichtung einer im Formbacken ausgebildeten Vakuumkanaleinrichtung ausgebildet ist, die die Formfläche des in der Formstrecke geführten Formbackens mit Vakuum beaufschlagt.

In bevorzugter Weiterbildung kann vorgesehen sein, dass die Vakuumeinrichtung oder der Teil der Vakuumeinrichtung den Führungs- und/oder Temperierkörper durchgreifend und/oder innerhalb eines Führungs- und/oder Temperierkörpers und/oder in einem Zwischenraum zwischen zwei aneinandergrenzenden Führungs- und/oder Temperierkörpern und/oder angrenzend an einen Führungs- und/oder Temperierkörper ausgebildet ist.

Es kann vorgesehen sein, dass die Anschlusseinrichtung an dem Formbacken fest angeordnet, als eine gleitende Anschlusseinrichtung ausgebildet ist. Die Erfindung wird nun anhand von Ausführungsbeispielen näher erläutert. Es zeigen
- Fig. 1: ein Beispiel einer Vorrichtung zum Herstellen von Kunststoffrohren in einer schematischen Draufsicht;
- Fig. 2: einen Korrugator der Vorrichtung in Fig. 1 in einer perspektivischen Darstellung;
- Fig. 3: ein Formbackenpaar der Vorrichtung in Fig. 1 ,das nicht Teil der Erfindung ist in perspektivischer Darstellung;
- Fig. 4: einen Ausschnitt eines Einlaufabschnitts der Vorrichtung in Fig. 1 in perspektivischer Darstellung;
- Fig. 5: den Zwischenabschnitt der Vorrichtung in Fig. 1 der nicht Teil der Erfindung darstellt mit den Formstrecken und den Rückführungen in einer Schnittdarstellung;
- Fig. 6: ein Kupplungsmodul mit Temperiermittelkanal-Umleitung in einer perspektivischen Schnittdarstellung.
- Fig. 7: ein Ausführungsbeispiel der erfindungsgemäßenVorrichtung zum Herstellen von Kunststoffrohren in einer perspektivischen Darstellung;
- Fig. 8: den Zwischenabschnitt der Vorrichtung in Fig. 7 mit den Formstrecken und den Rückführungen in einer Schnittdarstellung;
- Fig. 9: ein Formbackenpaar der Vorrichtung in Fig. 7 in perspektivischer Darstellung;
- Fig. 10: einen Einlaufabschnitts der Vorrichtung in Fig. 7 in perspektivischer Darstellung;
- Fig. 11: das Spielausgleichmodul im Zwischenabschnitt der Vorrichtung in Fig. 7 mit den Formstrecken und den Rückführungen in einer Schnittdarstellung;
- Fig. 12: das Spielausgleichmodul im Zwischenabschnitt der Vorrichtung in Fig. 7 mit den Formstrecken und den Rückführungen in einer perspektivischen Schnittdarstellung;
- Fig. 13: das Spielausgleichmodul im Zwischenabschnitt der Vorrichtung in Fig. 7 mit den Formstrecken und den Rückführungen in einer Schnittdarstellung von oben.

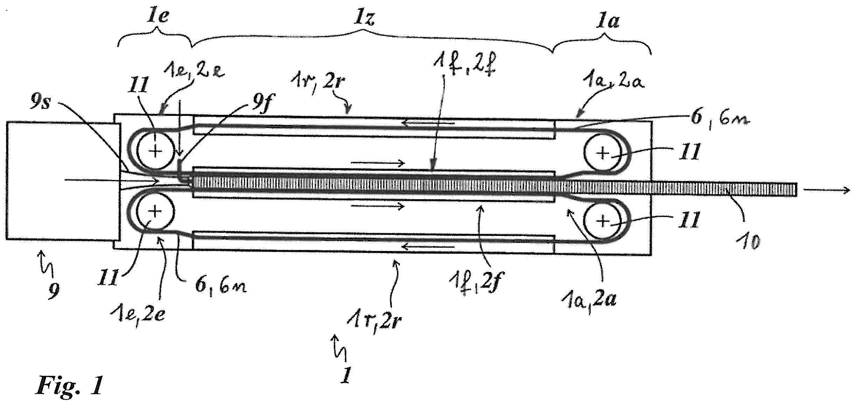

Fig. 1 zeigt eine Vorrichtung zum Herstellen von Kunststoffrohren 10, mit einem Extruder 9 mit Spritzkopf 9s und einem Korrugator 1. In den Korrugator wird über den Spritzkopf 9s ein Kunststoffschmelzeschlauch zum Ausformen eines Kunststoffrohres 10 eingeleitet.

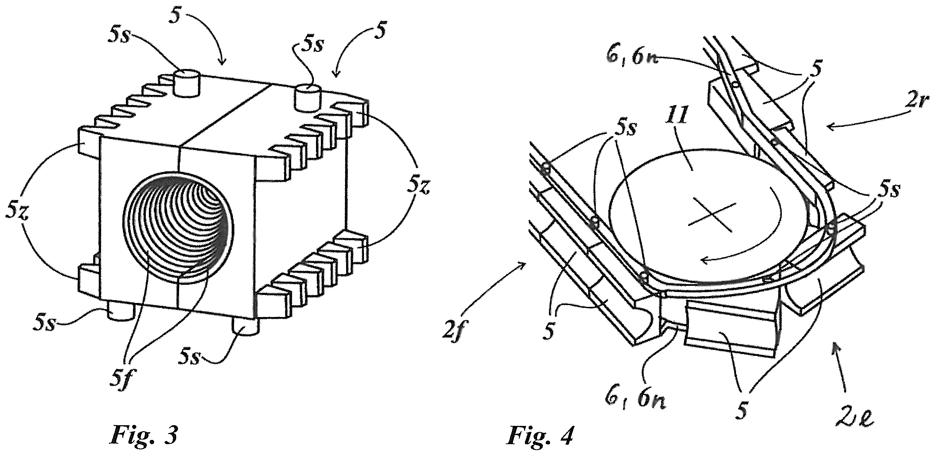

Der Korrugator 1 weist eine Formstrecke 1f auf, in der Formbacken 5 paarweise (siehe Fig. 3) in Produktionsrichtung geführt werden.

In einem Einlaufabschnitt 1e des Korrugators 1 werden die Formbacken 5 in einem Einlaufmodul 2e zu Formbackenpaaren zum Anfang der Formstrecke 1f zusammengeführt.

In einem Auslaufabschnitt 1a des Korrugators 1 werden die Formbackenpaare in einem Auslaufmodul 2a vom Ende der Formstrecke 1f auseinander geführt.

Die Formstrecke 1f ist in einem zwischen dem Einlaufabschnitt 1e und dem Auslaufabschnitt 1a angeordneten Zwischenabschnitt 1z des Korrugators 5 als Formstreckenmodul 2f ausgebildet. Ferner ist in dem Zwischenabschnitt 1z beidseitig der Formstrecke 1f jeweils eine Rückführung 1r ausgebildet, nämlich eine Rückführung 1r für die linken Formbacken und eine Rückführung 1r für die rechten Formbacken. In den Rückführungen 1r werden die Formbacken 5 vom Ende der Formstrecke 1f zum Anfang der Formstrecke 1f rückgeführt. Die Rückführungen 1r, 1r sind als zwei separate Rückführungsmodule 2r, 2r ausgebildet. Sie sind parallel zueinander angeordnet. Das Formstreckenmodul 2f ist dazwischen angeordnet.

Die hintereinander angeordneten Formbackenpaare liegen in der Formstrecke 1f stirnseitig aufeinander auf Stoß und bilden mit ihren Formflächen den Formkanal aus. Der Formkanal ist als zylindrischer Hohlraum ausgebildet, in welchem das Kunststoffrohr durch Abkühlen des Kunststoffschmelzeschlauchs ausgebildet wird. Ein Formbackenpaar umfasst zwei spiegelbildlich ausgebildete Formbacken 5, deren Formflächen 5f (siehe Fig. 3) die Negativform für das in der Vorrichtung ausgebildete Kunststoffrohr 10 bilden. Zur Herstellung von Kunststoffwellrohren sind die Formflächen 5f wellenförmig. Die Formflächen 5f der in der Formstrecke 1f auf Stoß angeordneten Formbackenpaare bilden einen durchgehenden Formkanal.

Der in Fig. 1 nur schematisch dargestellte Extruder 9 weist einen düsenförmigen Spritzkopf 9s auf, dessen Austrittsöffnung am Eingang der Formstrecke angeordnet ist. Über den Spritzkopf 9s wird der Kunststoffschmelzeschlauch in die Formstrecke des Korrugators eingespritzt. Über entsprechende Drucksteuerung werden die an der Innenseite und der an der Außenseite des Kunststoffschmelzeschlauchs in der Formstrecke 1f einwirkenden Drücke gesteuert. Abhängig von der Ausbildung der Düseneinrichtung des Spritzkopfs 9s können ein- und mehrwandige Kunststoffrohre hergestellt werden.

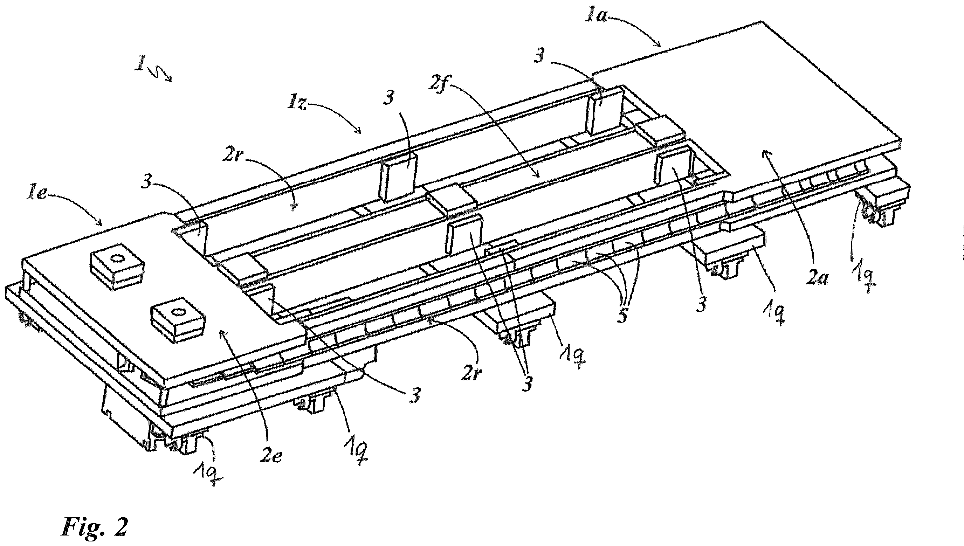

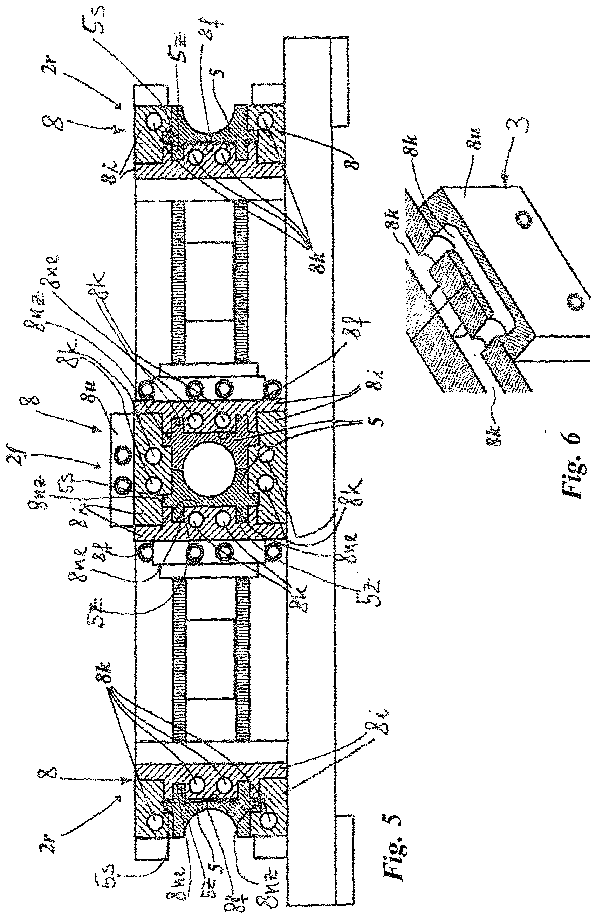

Die Formbacken 5 sind in einer ortsfesten Führungseinrichtung 6 geführt. Wie in den Figuren 5 und 6 in Verbindung mit Fig. 2 erkennbar, wird in dem dargestellten Ausführungsbeispiel die Führungseinrichtung 6 von Führungs- und/oder Temperierkörpereinrichtungen 8 gebildet, die stationär auf Querträgern 1q abgestützt sind. In den Führungs- und/oder Temperierkörpereinrichtungen 8 sind Temperiermittelkanäle 8k ausgebildet, die von einem Temperiermittel durchströmt sind. Die Führungs- und/oder Temperierkörpereinrichtungen 8 sind aus Führungs- und/oder Temperierkörpern 8i zusammengesetzt. Die Führungs- und/oder Temperierkörper 8i sind so angeordnet, dass sie die passierenden Formbacken 5 oberhalb, unterhalb und seitlich umgeben. Die Führungs- und/oder Temperierkörper 8i weisen Führungs- und/oder Temperierflächen 8f auf, an denen die passierenden Formbacken 5 gleitend geführt sind (siehe Fig. 5). Die Führungs- und/oder Temperierflächen 8f sind komplementär zur Außenseite der Formbacken ausgebildet. In den Führungs- und/oder Temperierflächen 8f sind Führungsnuten 6n, 8nz, 8ne ausgebildet, in die Führungsstifte 5s oder bei abgewandelten Ausführungen andere Vorsprünge der Formbacken 5 eingreifen. Die Führungs- und/oder Temperierkörper 8i bilden somit Temperierungskörper zur Temperierung der Formbacken 5 und gleichzeitig bilden sie Führungskörper, in oder an denen die Formbacken 5 geführt werden. Die Formflächen 5f der Formbacken 5 werden durch das Temperiermedium, das durch die Temperiermittelkanäle 8k der Führungs- und/oder Temperierkörper 8i strömt, indirekt temperiert, d.h. in der Regel gekühlt. Es sind jedoch auch Anwendungen möglich, bei denen die Temperatur des Temperiermittels so eingestellt wird, dass zumindest in bestimmten Abschnitten des Korrugators eine Erwärmung der Formbacken durch die Führungs- und/oder Temperierkörpereinrichtung 8 erfolgt.

Figur 5 zeigt einen Querschnitt durch den Zwischenabschnitt 1z. Erkennbar ist in der Mitte die Formstrecke 1f und an den beiden Seiten je eine Rückführung 1r. Die Führungs- und/oder Temperierkörper 8i sind aus länglichen Grundkörpern gebildet, in denen jeweils zwei Temperiermittelkanäle 8k angeordnet sind. Die Temperiermittelkanäle 8k verlaufen entlang der Längserstreckungsrichtung der Führungs- und/oder Temperierkörper 8i. Die Temperiermittelkanäle 8k werden von einem Temperiermittel durchströmt. Die Formbacken 5 passieren die Führungs- und/oder Temperierkörper 8i entlang der Längserstreckungsrichtung der Führungs- und/oder Temperierkörper 8i. Die Temperiermittelkanäle 8k erstrecken sich in die Führungsrichtung.

Die Führungs- und/oder Temperierkörper 8i wirken, wie bereits beschrieben, mit den passierenden Formbacken 5 zur Führung und Temperierung zusammen. Die Führungs- und/oder Temperierkörper 8i weisen hierfür die Führungs- und/oder Temperierflächen 8f auf, die mit Führungs- und/oder Temperierflächen der Formbacken 5 zusammenwirken. In dem dargestellten Beispiel sind die führungs- und temperierkörperseitigen Führungs- und/oder Temperierflächen 8f an der den zugeordneten Formbacken 5 zugewandten Seite der Führungs- und/oder Temperierkörper 8i ausgebildet. Die formbackenseitigen Führungs- und/oder Temperierflächen sind an der Außenseite der Formbacken 5 ausgebildet. An der davon abgewandten Seite der Formbacken 5 sind die Formflächen 5f ausgebildet, die über die gesamte Fläche eine möglichst gleichmäßige Temperaturverteilung erhalten sollen.

Wie Fig. 5 zeigt, sind die Führungs- und/oder Temperierkörper 8i im Formstreckenmodul 2f so ausgebildet, dass die Formbackenpaare von den Führungs- und/oder Temperierkörpern 8i umschlossen werden. Wie Fig. 5 entnehmbar, umschließen in der Formstrecke vier Führungs- und/oder Temperierkörper 8i die Formbackenpaare an allen vier Längsseiten, indem zwei seitliche Führungs- und/oder Temperierkörper 8i mit den Seitenflächen der Formbackenpaare in thermischem Kontakt sind und zwei Führungs- und/oder Temperierkörper 8i mit der Oberseite bzw. mit der Unterseite der Formbackenpaare in thermischem Kontakt sind. Die in den Rückführungsmodulen 2r angeordneten Führungs- und/oder Temperierkörper 8i sind wie die vorgenannten Führungs- und/oder Temperierkörper 8i ausgebildet, jedoch mit dem Unterschied, dass die Formbacken 5 in den Rückführungen 1r nur an drei Längsseiten durch die Führungs- und/oder Temperierkörper 8i umgeben sind, wobei die offenen Seiten der Formbacken 5 die Formflächen 5f aufweisen, die also nicht abgedeckt sind.

Zur primären Führung der Formbacken 5 sind, wie bereits beschrieben, Nuten 8nz, 8ne in den oberen und unteren Führungs- und/oder Temperierflächen 8f ausgebildet, in denen die oberen und unteren Führungsstifte 5s der Formbacken 5 eingreifen. In bevorzugten Ausführungen sind die Führungsstifte 5s mit einem Durchmesser kleiner 14 mm ausgebildet. Die Nuten 8nz zur Führung der Führungsstifte 5s werden, wie in Figur 5 dargestellt, durch aneinander angrenzende Führungs- und/oder Temperierkörper 8i gebildet, d.h. es sind nutenförmige Spalträume zwischen den aneinander angrenzenden Führungs- und Temperierkörpern 8i ausgebildet, die die Führungsnuten 8nz bilden. Ferner sind auch seitlich Führungsnuten 8ne als einstückige Nuten in den Führungs- und/oder Temperierkörpern 8i ausgebildet. In diesen Nuten 8ne greifen bei dem dargestellten Ausführungsbeispiel die Zahnleisten 5z der Formbacken 5 ein. Auch dadurch wird eine Führung der Formbacken 5 erhalten.

Durch diese ineinandergreifenden Führungsstrukturen, d.h. die Zahnleisten 5z, die Führungsstifte 6n und/oder ähnliche weiter ineinandergreifende Vertiefungen und Erhöhungen, wird die Größe der Kontaktfläche zwischen den Führungs- und/oder Temperierkörpern 8i und den Formbacken 5 beeinflusst und damit die Wärmeübertragung zumindest mitbestimmt.

Bezug nehmend auf Fig. 4 sei noch auf weitere Führungsnuten verwiesen. Diese sind als untere und obere Führungsnuten 6n in dem Einlaufmodul 2e und in dem Auslaufmodul 2a ausgebildet. In diese Nuten 6n greifen die Führungsstifte 5s der Formbacken unter Ausbildung der Führung im Umlenkbereich des Einlaufabschnitts 1e und des Auslaufabschnitts 1a.

Die Führungseinrichtung zur Führung der Formbacken ist somit eine zusammengesetzte Einrichtung, zusammengesetzt aus der Führung durch die Führungs- und/oder Temperierkörpereinrichtungen 8 (siehe Fig. 5) und aus der Führung in den Umlenkbereichen im Einlaufabschnitt 1e und im Auslaufabschnitt 1a.

Die Führungsnuten 6n, 8nz, 8ne der Führungseinrichtungen 6, 8, 8i sind als endlose, d.h. jeweils durchgehende Führungsnuten 6n ausgebildet, in denen die an den Formbacken 5 angeordneten Führungsstifte 5s im Sinne eines Endlos-Umlaufs gleiten. Die Formbacken 5 weisen im dargestellten Fall jeweils einen oberen und einen unteren Führungsstift 5s auf, die an entgegengesetzten Endabschnitten des Formbackens 5 jeweils auf der Oberseite bzw. der Unterseite des Formbackens 5 angeordnet sind. Dementsprechend sind zwei obere Führungsnuten 6n, 8nz, 8ne und zwei untere Führungsnuten 6n, 8nz, 8ne in den jeweiligen Führungs- und/oder Temperierkörpern 8i und in den Umlenkbereichen der Ein- und Auslaufabschnitte 1e, 1a ausgebildet. Die oberen und die unteren Führungsnuten weisen unterschiedliche Geometrien auf, wobei die durch die Führungsnuten definierten Führungsbahnen so ausgebildet sind, dass die Formbacken 5 in den Kurvenabschnitten der Führungsbahnen eine Schwenkbewegung ausführen (siehe Fig. 4), wie dies in den Umlenkbereichen der Ein- und Auslaufabschnitte erforderlich ist. Durch die Schwenkbewegung ist der Kurvenverschleiß minimiert. In dem in Fig. 3 dargestellten Ausführungsbeispiel sind die Führungsstifte 5s starr mit den Formbacken 5 verbunden, beispielsweise mittels einer Pressverbindung. Es kann aber auch vorgesehen sein, die Führungsstifte 5s drehbar zu lagern, beispielsweise in Gleitlagern, wodurch der besagte Kurvenverschleiß noch weiter reduziert ist.

Die Formbacken 5 weisen im dargestellten Fall jeweils zwei Zahnleisten 5z auf, die im Einlaufmodul 2e und im Auslaufmodul 2a mit Umlenkritzeln 11 zusammenwirken, wie in Fig. 4 gezeigt. In Fig. 4 sind die Verzahnungen nicht dargestellt.

Wie Fig. 2 sind in dem dargestellten Ausführungsbeispiel die im Zwischenabschnitt 1z angeordneten Module, nämlich das Formstreckenmodul 2f und die beiden Rückführungsmodule 2r jeweils aus zwei Teilmodulen ausgebildet. Zur Verbindung benachbarter Module sind plattenförmige Kupplungseinrichtungen 3 vorgesehen. Die Kupplungseinrichtungen 3 sind durch Schraubverbindungen lösbar mit den Modulen verbunden. Die Formstreckenmodule 2f sind an den Stirnflächen durch die plattenförmigen Kupplungseinrichtungen 3 miteinander gekuppelt. Ebenso sind die Rückführungsmodule 2r an den Stirnflächen durch Kupplungseinrichtungen 3 miteinander gekuppelt. Zur Kupplung des Einlaufmoduls 2e und des Auslaufmoduls 2a mit den Formstreckenmodulen 2f und den Rückführungsmodulen 2r sind ebenfalls Kupplungseinrichtungen 3 in den Verbindungsbereichen angeordnet.

Zur Verbindung der Temperierkanäle 8k benachbarter Module sind Temperierkanalüberleitungen 8u in den Kupplungsmodulen 3 vorgesehen. Es sei verwiesen auf Figur 6. Die Temperierkanalumleitungen 8u weisen U-förmige Umleitungskanäle 8k auf, deren Endabschnitte mit Sacklöchern korrespondieren, die die Seitenwandung der Führungs- und/oder Temperierkörper 8i der Module senkrecht durchgreifen und in die Temperiermittelkanäle 8k münden.

Die Führungseinrichtung 6 im Zwischenabschnitt 1z wird, wie bereits beschrieben, durch die Führungs- und/oder Temperierkörpereinrichtung 8 gebildet. Dies ist auf einem Grundgestell angeordnet, wie die Figuren 2 und 5 zeigen. Das Grundgestell besteht in dem in Figur 2 dargestellten Fall aus mehreren zueinander beabstandeten Grundgestellteilen, im dargestellten Fall Querträgern 1q. Das Einlaufmodul 2e ist auf einer eigenen Lagerplatte angeordnet, wobei die Lagerplatte auf zwei Querträgern 1q abgestützt ist. Das Auslaufmodul 2a ist auf zwei zueinander beabstandeten Querträgern 1q angeordnet. Das Einlaufmodul 2e und das Auslaufmodul 2a werden durch jeweils einen Querträger 1q mit einem Modul des Zwischenabschnittes 1z in den Verbindungsbereichen gekuppelt. Die Module des Zwischenabschnittes 1z werden untereinander in den Verbindungsbereichen durch einen Querträger 1q miteinander gekuppelt. Die Querträger 1q enthalten Kanalverbindungen mit U-förmigen Kanälen zur Verbindung der Temperierkanäle der Module. In einem abgewandelten Ausführungsbeispiel ist es auch möglich, dass die unteren Temperierkanäle 8k der Module durch Kupplungseinrichtungen 3 miteinander gekuppelt sind und die Kupplungseinrichtungen 3 auf den Querträgern 1q angeordnet sind.

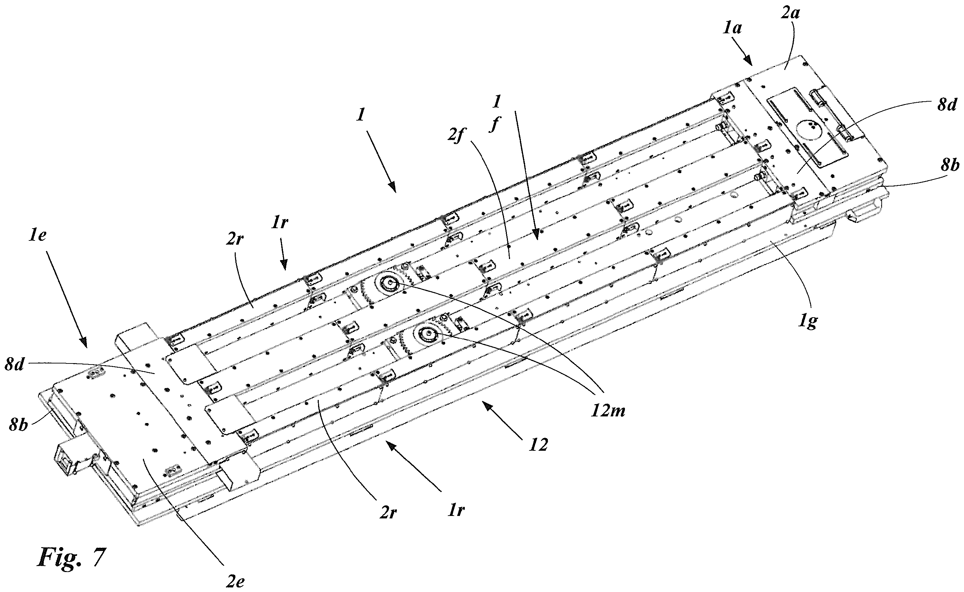

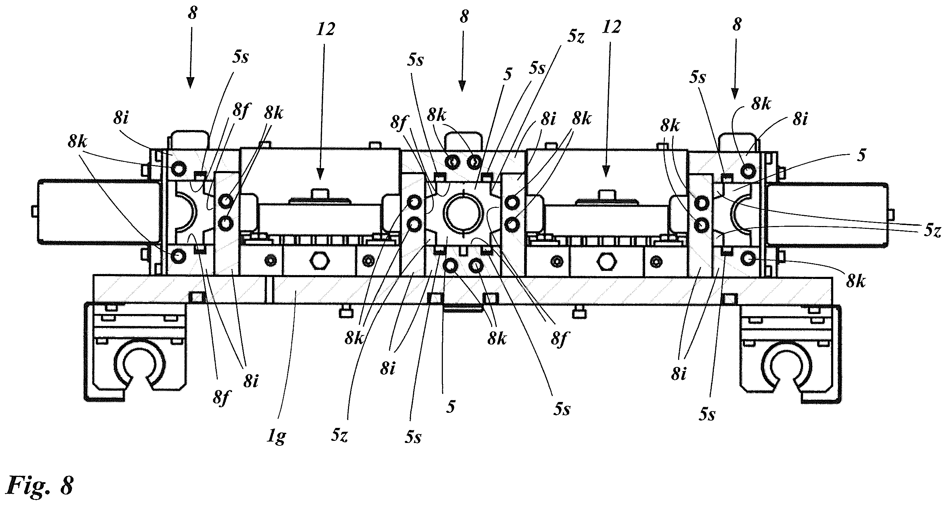

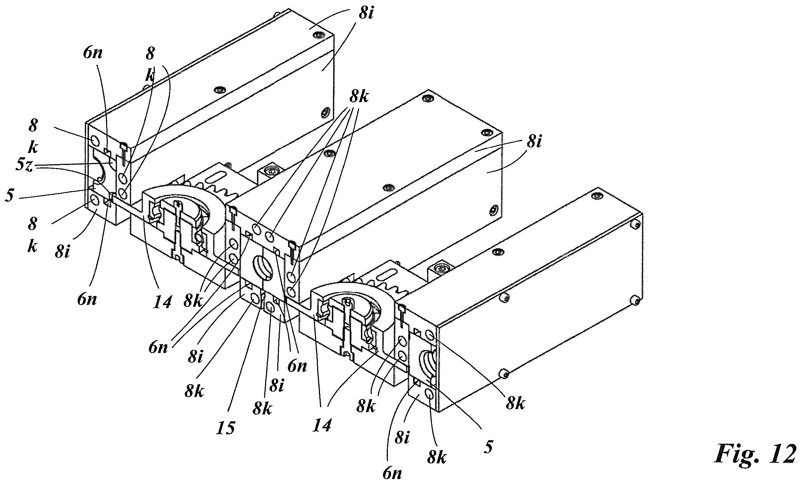

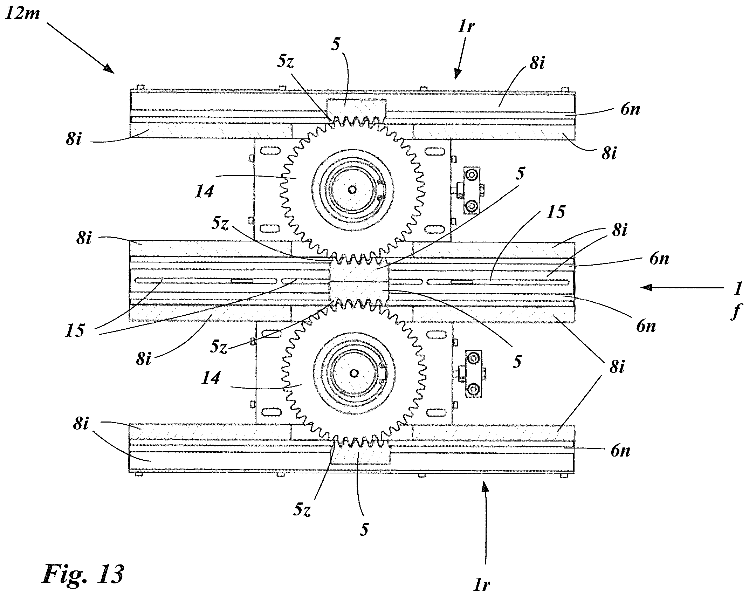

Die Figuren 7 bis 13 zeigen ein Ausführungsbeispiel der erfindungsgemäßen Vorrichtung zum Herstellen von Kunststoffrohren 10. Im Unterschied zu der oben beschriebenen Ausführung sind die Formstrecke 1f, der Einlaufabschnitt 1e, der Auslaufabschnitt 1a und die Rückführung 1r auf einer gemeinsamen Grundplatte 1g montiert (siehe Fig. 7 und 8). Die Formstrecke 1f sowie die Rückführung 1r setzt sich, wie in Figur 7 gezeigt, aus mehreren Formstreckenmodulen 2f und Rückführungsmodulen 2r zusammen. Zusätzlich ist in der Formstrecke 1f und der Rückführung 1r ein Spielausgleichmodul 12m angeordnet.

Wie in den Figuren 7 und 8 gezeigt, werden in diesem erfindungsgemäßen Ausführungsbeispiel die Temperierkanäle 8k der Formstreckenmodule 2f und der Rückführungsmodule 2r nicht über Kupplungseinrichtungen 3 miteinander verbunden. Die Formstreckenmodule 2f und Rückführungsmodule 2r liegen in diesem Ausführungsbeispiel jeweils auf Stoß aufeinander auf. Dabei werden die Temperierkanäle 8k zwischen den Modulen durch Dichtungen abgedichtet.

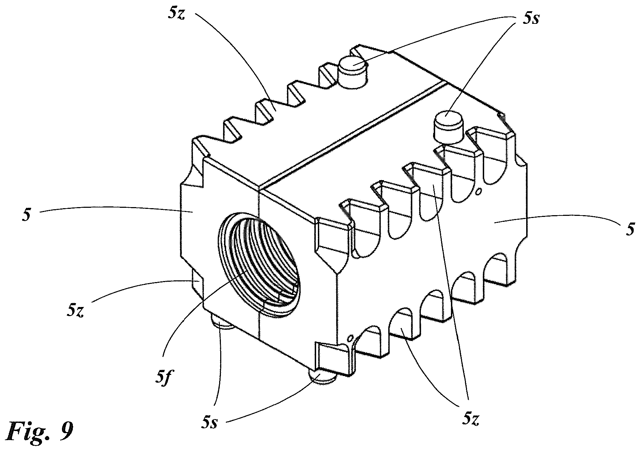

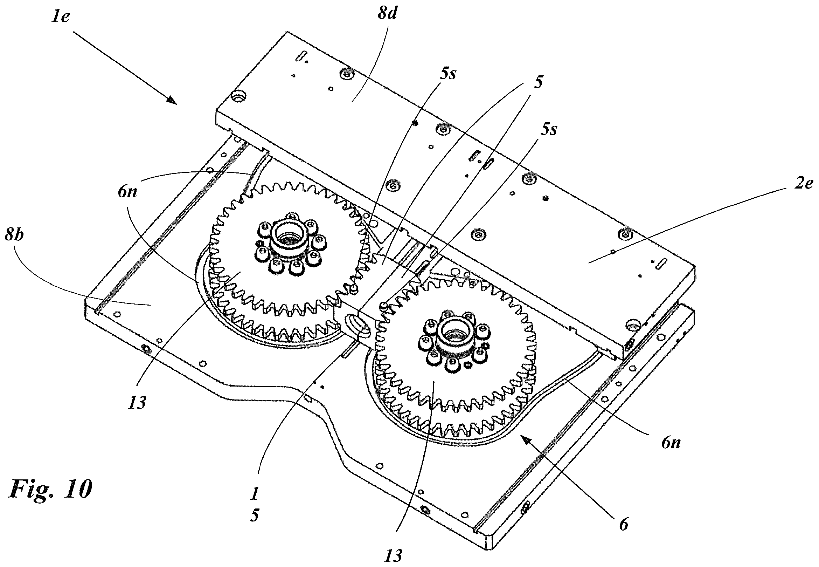

Die Formbacken 5 in dem Ausführungsbeispiel der Figuren 7 bis 13 unterscheiden sich zu den oben beschrieben Formbacken 5 nur darin, dass die Zahnleisten 5z innenliegend in dem Körper der Formbacken 5 ausgebildet sind (siehe Fig. 9). Dadurch stehen die Zahnleisten 5z seitlich nicht über den Grundkörper der Formbacken 5 über. Die Seitenflächen der Formbacken 5, die mit den Führungs- und Temperierflächen 8f, wie oben beschrieben, zusammenwirken, können dadurch leichter und präziser hergestellt werden. Die nach innen liegenden Zahnleisten 5z auf der Außenseite der Formbacken 5 sind am oberen und unteren Bereich der Formbacken ausgebildet. Durch die doppelte Anordnung der Zahnleisten 5z und der entsprechend doppelt ausgebildeten Antriebsritzel 13 (siehe Figur 10) kann ein homogener und präziser Vorschub der Formbacken 5 erreicht werden.

Wie in der Fig. 10 gezeigt, sind in diesem Ausführungsbeispiel in dem Einlaufmodul 2e zwei Antriebsritzel 13 zum Schiebeantrieb der linken und rechten Formbacken 5 ausgebildet. Jeweils ein Antriebsritzel 13 ist durch zwei übereinander angeordnete Zahnräder ausgebildet, wobei die Zahnräder miteinander über eine Antriebswelle verbunden sind. Die Antriebsritzel 13 greifen mit ihren Zähnen in die nach innen liegende Zahnleiste 5z der Formbacken 5 ein und verschieben die Formbacken 5 in Produktionsrichtung. Wie in Fig. 10 gezeigt, wirken die Antriebsritzel 13 in diesem Ausführungsbeispiel auch zum Umlenken der Formbacken 5, analog zu den Figuren 1 und 4.

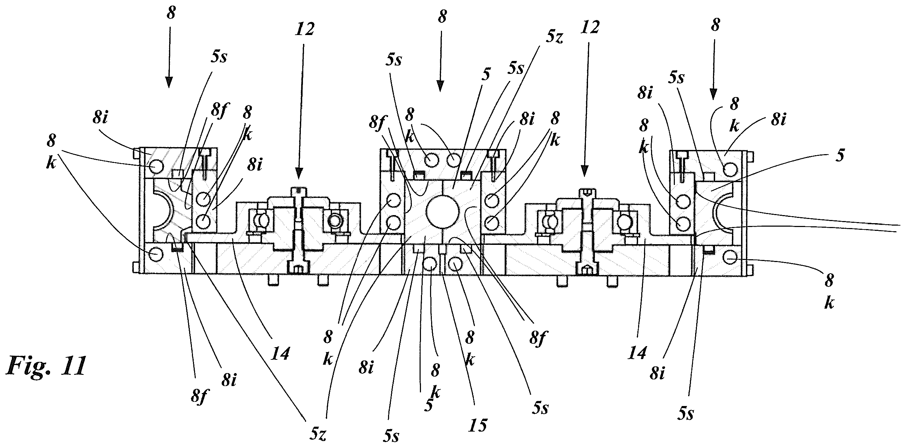

Die Formstrecke 1f, die als Führungseinrichtung der in Produktionsrichtung laufenden Formbackenpaare durch Führungs- und/oder Temperierkörper 8i ausgebildet wird, ist in dem Ausführungsbeispiel der Figuren 7 bis 13 durch vier Führungs- und/oder Temperierkörper 8i ausgebildet (siehe Figuren 8 und 11). Ein Führungs- und/oder Temperierkörper 8i liegen auf der Grundplatte 1g auf und bilden mit ihrer Oberseite die Bodenfläche der Formstrecke. Die Seitenflächen der Formstrecke 1f werden durch zwei Führungs- und/oder Temperierkörper 8i ausgebildet, die aufrecht auf der Grundplatte 1g angeordnet sind und mit dieser verschraubt sind. Als Deckfläche der Formstrecke 1f ist ein vierter Führungs- und/oder Temperierkörper 8i angeordnet, der mit den seitlichen Führungs- und/oder Temperierkörpern 8i verschraubt ist. Die Bodenfläche, die beiden Seitenflächen und die Deckfläche der Formstrecke 1f bilden jeweils Temperier- und Führungsflächen 8f für die in der Formstrecke geführten Formbackenpaare 5, 5.

In jedem der vier Führungs- und/oder Temperierkörper 8i der Formstrecke 1f sind zwei Temperierkanäle 8k ausgebildet, welche die Führungs- und/oder Temperierkörper 8i in Längsrichtung durchlaufen. Durch die vierseitige Anordnung der Temperierkanäle 8k kann ein gleichmäßiges Kühlen des im Formkanal gebildeten Kunststoffrohres 10 erreicht werden. In der Bodenfläche und der Deckfläche der Formstrecke 1f sind Führungsnuten 6n, 8nz, 8ne zur Führung der Formbacken 5 ausgebildet. Die Führungsstifte 5s der Formbacken 5 greifen in die Führungsnuten 6n, 8nz, 8ne ein und gewährleisten eine präzise Führung.

Als Führungs- und/oder Temperierkörper 8i im Einlaufabschnitt 1e und im Auslaufabschnitt 1a ist jeweils eine Bodenplatte 8b und jeweils eine Deckplatte 8d vorgesehen. Zwischen diesen beiden Platten ist ein Führungs- und/oder Temperierkörper 8i, der sich in Richtung der Formstrecke 1f erstreckt, angeordnet. In den Platten 8b und 8d und in den dazwischen angeordneten Führungs- und/oder Temperierkörper 8i sind Kühlkanäle ausgebildet. Die Kanäle in der Bodenplatte 8b und in der Deckplatte 8d bilden jeweils ein verzweigtes Kanalnetz mit Kanalabschnitten, die in Produktionsrichtung verlaufen und Kanalabschnitten, die in Rückführungsrichtung verlaufen und querlaufende Verbindungskanäle. Zusätzlich verlaufen Verbindungskanäle, die das Kanalnetz der Bodenplatte mit dem Kanalnetz der Deckpatte verbinden, durch die zwischen diesen beiden Platten liegenden Führungs- und/oder Temperierkörper 8i.

Die Versorgung der Kühlkanäle erfolgt über einen linken und einen rechten Wasserkreislauf. Der linke und der rechte Wasserkreislauf versorgt jeweils den Einlaufabschnitt, den Auslaufabschnitt und die Formstrecke. Der Kreislauf durchläuft hierbei zuerst die Kühlkanäle in der Rückführung und sodann die Kühlkanäle in der Formstrecke. Die Umleitung erfolgt im Kanalsystem im Auslaufbereich. Im Einlaufbereich erfolgt der Zulauf mit der Aufteilung in die vier Ebenen, nämlich in die obere Ebene, in der die oberen Führungs- und/oder Temperierkörper 8i und die Deckplatte 8d angeordnet sind, eine untere Ebene, in der die unteren Führungs- und/oder Temperierkörper 8i und die Bodenplatte 8b angeordnet sind, und zwei dazwischen liegenden parallelen Ebenen, in denen die beiden übereinander liegenden Kühlkanäle 8k der seitlichen Führungs- und/oder Temperierkörper 8i angeordnet sind.

Wie in den Figuren 9 bis 13 gezeigt, sind Vakuumzonen 15 in den Führungs- und/oder Temperierkörpern 8i ausgebildet, welche die Bodenfläche der Formstrecke 1f ausbilden. Im Einlaufabschnitt 1e und im Auslaufabschnitt 1a sind die Vakuumzonen 15 in der Bodenplatte 8b des Einlaufabschnittes 1e bzw. des Auslaufabschnittes 1a ausgebildet (siehe Figur 10). Die Vakuumzonen 15 bestehen aus mehreren Durchgangsschlitzen, die die in der Formstrecke angeordneten Führungs- und/oder Temperierkörper 8i vollständig durchgreifen und im Einlaufabschnitt 1e und im Auslaufabschnitt 1a die Bodenplatte 8b durchgreifen. Die Durchgangsschlitze sind hintereinander fluchtend in Produktionsrichtung und beabstandet zueinander angeordnet und mittig, d.h. in einer mit der Längsmittellinie der Formstrecke fluchtenden Linie angeordnet. Die als Durchgangsschlitzte ausgebildeten Vakuumzonen 15 sind an einem nicht dargestellten externen Vakuumversorgungssystem angeschlossen, welches im dargestellten Ausführungsbeispiel an der Unterseite der Grundplatte 1g angeordnet ist. Hierfür weist die Grundplatte 1g Bohrungen auf, die in die als Durchgangsschlitze ausgebildeten Vakuumzonen 15 münden. In den Formbacken 5 sind Vakuumkanäle ausgebildet, die mit ihren inneren Enden in die Formfläche münden und mit ihren äußeren Enden eine gleitende Anschlussverbindung mit den Vakuumzonen ausbilden, während die Formbacken 5 über die Bodenstrecke laufen.

Die Rückführung 1r, die durch Führungs- und/oder Temperierkörper 8i ausgebildet wird, ist in dem Ausführungsbeispiel der Figuren 7 bis 13 durch drei Temperierkörper 8i ausgebildet (siehe Figuren 8 und 11). Ein Temperierkörper 8i liegt auf der Grundplatte 1g auf und bildet die Bodenfläche der Temperier- und Führungsfläche 8f der Rückführung 1r. Die linke und die rechte Seitenfläche der Rückführung 1r wird jeweils durch einen Führungs- und/oder Temperierkörper 8i ausgebildet, der aufrecht auf der Grundplatte angeordnet ist und mit dieser verschraubt ist. Als Deckfläche der Formstrecke 1f ist ein dritter Führungs- und/oder Temperierkörper 8i angeordnet, der mit den seitlichen Führungs- und/oder Temperierkörpern 8i verschraubt ist. Die äußere Seite der Rückführung 1r ist mit einem Deckel abgedeckt und schützt die Formbacken 5 dadurch vor Verschmutzung. Es sind auch Ausführungen möglich, bei denen die äußere Seite offen gelassen wird. In allen drei Führungs- und/oder Temperierkörpern 8i sind zwei Temperierkanäle 8k ausgebildet, welche die Führungs- und/oder Temperierkörper 8i in Längsrichtung durchlaufen.

Wie in den Figuren 7, 8 und 11 bis 13 gezeigt, ist in dem erfindungsgemäßen Ausführungsbeispiel ein Spielausgleichmodul 12m angeordnet. Dies Spielausgleichmodul 12m besteht aus einem linken Teil und einem rechten Teil, welches jeweils aus einer Rückführung und einer Formstrecke und einem Spielausgleichsritzel 14 zusammengesetzt ist. Dabei greift ein Spielausgleichsritzel 14 in die zugeordnete untere innenliegende Zahnleiste 5z der Formbacken 5 in der Formstrecke 1f und in die Rückführung 1r ein. Dazu weisen die seitlichen Führungs- und/oder Temperierkörper 8i der Formstrecke 1f und der Rückführung 1r Aussparungen zum Durchgriff des Spielausgleichsritzels 14 auf (siehe Figuren 11 bis 13). Die Aussparungen in den seitlichen Führungs- und/oder Temperierkörpern 8i sind so angeordnet, dass die Temperierkanäle 8k in den seitlichen Führungs- und/oder Temperierkörpern 8i untergriffen werden.

Durch das Verschieben der Formbacken 5 in der Formstrecke 1f in Produktionsrichtung wird das Spielausgleichsritzel 14 angetrieben. Die Wegstrecke, welche die Formbacken 5 vom Spielausgleichmodul 12m in der Formstrecke 1f über den Auslaufabschnitt 1a bis zum Spielausgleichmodul 12m in der Rückführung 1r durchlaufen, ist genau so dimensioniert, dass das Spielausgleichsritzel 14 den rücklaufenden Formbacken 5 leicht vorauseilt, und diese, sobald ein Zahn des Spielausgleichsritzels 14 in einen rücklaufenden Formbacken 5 eingreift, diesen Formbacken 5 in Rücklaufrichtung (Bewegungsrichtung der Formbacken in der Rückführung 1r) zieht. Dadurch entsteht bei kalten Formbacken 5 ein Spielausgleich zwischen dem gezogenen Formbacken 5 und dem dahinter liegenden Formbacken 5, der das Spielausgleichmodul 12m noch nicht erreicht hat. Dieser Spielausgleich ist vorgesehen, um die Längenänderung der Formbacken 5 bei einer Temperaturänderung auszugleichen.

Ein zweiter Spielausgleich entsteht am Einlaufmodul vor dem Antriebsritzel. Die Wegstrecke der Formbacken 5 vom Spielausgleichmodul 12m in der Rückführung 1r bis zum Antriebsritzel 13 des Einlaufmoduls 2e ist genau so ausgebildet, dass das Antriebsritzel 13 dem einlaufenden Formbacken 5 vorrauseilt und diesen, sobald ein Zahn des Antriebsritzels 13 in einen rücklaufenden Formbacken 5 eingreift, im Einlaufabschnitt 1e in Produktionsrichtung zieht. Dieser zweite Speilausgleich ist vorgesehen, um ein Verklemmen der Formbacken in der Führungseinrichtung 6 bei hohen Temperaturen zu vermeiden.

### Bezugszeichenliste

- 1: Korrugator
- 1a: Auslaufabschnitt
- 1e: Einlaufabschnitt
- 1f: Formstrecke
- 1r: Rückführung
- 1q: Querträger
- 1z: Zwischenabschnitt
- 2a: Auslaufmodul
- 2e: Einlaufmodul
- 2f: Formstreckenmodul
- 2r: Rückführungsmodul
- 3: Kupplungseinrichtung
- 5: Formbacken
- 5f: Formfläche
- 5s: Führungsstifte
- 5z: Zahnleisten
- 6: ortsfeste Führungseinrichtung
- 6n, 8nz, 8ne: Führungsnut;
- 8: Führungs- und/oder Temperierkörpereinrichtung
- 8i: Führungs- und/oder Temperierkörper
- 8k: Temperierkanal
- 8u: Temperierkanalumleitung
- 8f: Temperierfläche
- 8b: Bodenplatte
- 8d: Deckplatte
- 9: Extruder
- 9f: Formluftzuführung
- 9s: Spritzkopf
- 10: Kunststoffrohr
- 11: Umlenkritzel
- 12: Spielausgleich
- 12m: Spielausgleichmodul
- 13: Antriebsritzel
- 14: Spielausgleichritzel
- 15: Vakuumzone

## Patentansprüche

1. Vorrichtung (10) zum Herstellen von Kunststoffrohren (10),
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
dass der Korrugator (1) eine Formstrecke (1f) aufweist, in der Formbacken (5) paarweise in Produktionsrichtung geführt werden,
dass in einem Einlaufabschnitt (1e) des Korrugators (1) die Formbacken (5) zu Formbackenpaaren zum Anfang der Formstrecke (1f) zusammengeführt werden, und
dass in einem Auslaufabschnitt (1a) des Korrugators (1) die Formbackenpaare vom Ende der Formstrecke (1f) auseinander geführt werden, und
dass in einem zwischen dem Einlaufabschnitt (1e) und dem Auslaufabschnitt (1a) angeordneten Zwischenabschnitt (1z) des Korrugators (5) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
mit einer ortsfesten Führungseinrichtung (6, 8, 8i) zur Führung der Formbacken (5) in der Formstrecke und/oder in der Rückführung wobei
a) die Führungseinrichtung (6) eine Führungs- und/oder Temperierkörpereinrichtung (8, 8i)) aufweist,
b) die Führungs- und/oder Temperierkörpereinrichtung (8, 8i) eine von Temperiermittel durchströmbare Temperiermittel-Kanaleinrichtung (8k) aufweist,
c) die Führungs- und/oder Temperierkörpereinrichtung (8, 8i) eine Führungs- und/oder Temperierflächeneinrichtung aufweist, die der Außenseite der passierenden Formbacken (5) unter Wärmeübertragung zugewandt ist,
d) in der Führungs- und/oder Temperierflächeneinrichtung (8, 8i) der Führungs- und/oder Temperierkörpereinrichtung (8, 8i) Erhebungen und/oder Vertiefungen (8nz, 8ne) aufweisende Führungsausnehmungen und/oder ebene Führungsflächen ausgebildet sind, die mit korrespondierenden Führungsausnehmungen (8nz, 8ne) und/oder Führungsflächen der passierenden Formbacken (5) zusammenwirken, **dadurch gekennzeichnet,**
e) **dass** die Führungs- und/oder Temperierkörpereinrichtung (8, 8i) so ausgebildet ist, dass die in der Formstrecke (1f) passierenden Formbackenpaare (5) und/oder die in der Rückführung (1r) passierenden Formbacken (5) an ihrer Außenseite zumindest teilweise überdeckt werden, wobei die Formbackenpaare (5) bzw.
die Formbacken (5) vorzugsweise in flächigem Kontakt mit der Führungs- und/oder Temperierkörpereinrichtung (8, 8i) entlang gleiten,
wobei der Formbacken innenliegend in dem Körper der Formbacken ausgebildete Zahnleisten aufweist, die seitlich nicht über den Grundkörper der Formbacken überstehen,
wobei die nach innen liegenden Zahnleisten auf der Außenseite der Formbacken am oberen und unteren Bereich der Formbacken ausgebildet sind.

2. Vorrichtung nach Anspruch 1,
**dadurch gekennzeichnet,**
**dass** die Führungs- und/oder Temperiermittel-Kanaleinrichtung (8k) parallele Temperiermittelkanäle (8k) aufweist, die sich durch die Führungs- und/oder Temperierkörpereinrichtung (8, 8i) hindurch erstrecken.

3. Vorrichtung nach einem der vorangehenden Ansprüche,
**dadurch gekennzeichnet,**
**dass** die Führungs- und/oder Temperierkörpereinrichtung (8, 8i) in der Formstrecke (1f) an der oberen Außenseite der passierenden Formbackenpaare (5) und an der unteren Außenseite der passierenden Formbackenpaare (5) und an der einen seitlichen Außenseite und an der anderen seitlichen Außenseite der passierenden Formbackenpaare (5) angeordnet ist und dadurch die passierenden Formbackenpaare (5) an vier Längsseiten überdeckt.

4. Vorrichtung nach einem der vorangehenden Ansprüche,
**dadurch gekennzeichnet,**
**dass** die Führungs- und/oder Temperierkörpereinrichtung (8, 8i) in der Rückführung (1r) der Formbacken (5) an der oberen Außenseite der Formbacken (5) und an der unteren Außenseite der Formbacken (5) angeordnet ist und an der seitlichen Außenseite der Formbacken (5) angeordnet ist, die der Formfläche (5f) der jeweiligen Formbacken (5) abgewandt angeordnet ist, d.h. die Formbacken (5) nur an drei Seiten überdeckt.

5. Vorrichtung nach einem der vorangehenden Ansprüche,
**dadurch gekennzeichnet,**
**dass** die Führungs- und/oder Temperierkörpereinrichtung (8) aus mehreren Führungs- und/oder Temperierkörpern (8i) ausgebildet ist, die die passierenden Formbackenpaare mehrseitig umschließen.

6. Vorrichtung nach einem der vorangehenden Ansprüche,
**dadurch gekennzeichnet,**
**dass** an der oberen Außenseite der in der Formstrecke passierenden Formbackenpaare (5) ein Führungs- und/oder Temperierkörper (8i) angeordnet ist, und/oder
**dass** an der unteren Außenseite der in der Formstrecke passierenden Formbackenpaare (5) mindestens ein Führungs- und/oder Temperierkörper (8i) angeordnet ist, und/oder
**dass** an der einen seitlichen Außenseite der in der Formstrecke passierenden Formbackenpaare (5) ein Führungs- und/oder Temperierkörper (8i) angeordnet ist, und/oder
**dass** an der anderen Außenseite der in der Formstrecke passierenden Formbackenpaare (5) ein Führungs- und/oder Temperierkörper (8i) angeordnet ist.

7. Vorrichtung nach einem der vorangehenden Ansprüche,
**dadurch gekennzeichnet,**
**dass** die Führungs- und/oder Temperierkörpereinrichtung (8) aus mehreren in Führungsrichtung axial hintereinander auf Stoß angeordneten Führungs- und/oder Temperierkörpern (8i) ausgebildet ist und/oder aus mehreren quer zur Führungsrichtung nebeneinander angeordneten Führungs- und/oder Temperierkörpern (8i) gebildet ist.

8. Vorrichtung nach einem der vorangehenden Ansprüche,
**dadurch gekennzeichnet,**
**dass** jeder Führungs- und/oder Temperierkörper (8i) auf der den passierenden Formbacken (5) und/oder den passierenden Formbackenpaaren (5) zugewandten Seite jeweils eine Führungs- und/oder Temperierfläche aufweist.

9. Vorrichtung nach einem der vorangehenden Ansprüche,
**dadurch gekennzeichnet,**
**dass** die Führungs- und/oder Temperierfläche der Führungs- und/oder Temperierkörper (8i) Führungsausformungen (8nz, 8ne) aufweist, die als Führungserhebungen und/oder Führungsvertiefungen ausgebildet sind.

10. Vorrichtung nach einem der Ansprüche 2 bis 9,
**dadurch gekennzeichnet,**
**dass** in jedem Führungs- und/oder Temperierkörper (8i) der Führungs- und/oder Temperierkörpereinrichtung (8) jeweils mindestens ein Temperiermittelkanal (8k) ausgebildet ist.

11. Vorrichtung nach Anspruch 10,
**dadurch gekennzeichnet,**
**dass** in dem Führungs- und/oder Temperierkörper (8i) mehrere parallele Temperiermittelkanäle (8k) ausgebildet sind.

12. Vorrichtung nach einem der Ansprüche 5 bis 11,
**dadurch gekennzeichnet,**
**dass** axial benachbarte Führungs- und/oder Temperierkörper (8i) auf Stoß angeordnet sind und eine Kupplungseinrichtung (3) aufweisen, die einen Temperiermittel-Verbindungskanal aufweist, über den der mindestens eine Temperiermittelkanal (8k) des einen Führungs- und/oder Temperierkörpers (8i) mit dem mindestens einen Temperiermittelkanal (8k) des anderen Temperierkörpers (8i) verbindbar ist.

13. Vorrichtung nach einem der vorangehenden Ansprüche,
**dadurch gekennzeichnet,**
**dass** im Bereich eines Führungs- und/oder Temperierkörpers (8i) eine Vakuumeinrichtung oder ein Teil einer Vakuumeinrichtung angeordnet ist, die mit einer externen Vakuumversorgung verbunden oder verbindbar ist, und an einer Ansschlusseinrichtung einer im Formbacken (5) ausgebildeten Vakuumkanaleinrichtung ausgebildet ist, die die Formfläche des in der Formstrecke geführten Formbackens (5) mit Vakuum beaufschlagt.

14. Vorrichtung nach Anspruch 13,
**dadurch gekennzeichnet,**
**dass** die Vakuumeinrichtung oder der Teil der Vakuumeinrichtung den Führungs- und/oder Temperierkörper (8i) durchgreifend und/oder innerhalb eines Führungs- und/oder Temperierkörpers (8i) und/oder in einem Zwischenraum zwischen zwei aneinandergrenzenden Führungs- und/oder Temperierkörpern (8i) und/oder angrenzend an einen Führungs- und/oder Temperierkörper (8i) ausgebildet ist.

15. Vorrichtung nach Anspruch 13 oder 14,
**dadurch gekennzeichnet,**
**dass** die Anschlusseinrichtung an dem Formbacken (5) fest angeordnet, als eine gleitende Anschlusseinrichtung ausgebildet ist.

## Claims

1. Device (10) for producing plastic pipes (10), having an extruder (9) having a spray head (9s) and a corrugator (1), into which a plastic melting hose is introduced via the spray head (9s) for moulding the plastic pipe (10), wherein it is provided that
the corrugator (1) has a moulding section (1f) in which mould blocks (5) are guided in pairs in the production direction,
in an inlet section (1e) of the corrugator (1), the mould blocks (5) are combined to form mould block pairs at the start of the moulding section (If), and
in an outlet section (1a) of the corrugator (1), the mould block pairs are separated from one another from the end of the moulding section (If), and
in an intermediary section (1z), arranged between the inlet section (1e) and the outlet section (1a), of the corrugator (5), the moulding section (1f) is formed for guiding the mould block pairs, and at least one return guide (1r) is formed in which the mould blocks (5) are returned from the end of the moulding section (1f) to the start of the moulding section (If),
having a stationary guide device (6, 8, 8i) for guiding the mould blocks (5) in the moulding section and/or in the return, wherein
a) the guide device (6) has a guide and/or tempering body device (8, 8i),
b) the guide and/or tempering body device (8, 8i) has a tempering means channel device (8k) through which the tempering means can flow,
c) the guide and/or tempering body device (8, 8i) has a guide and/or temperature control surface device, which faces towards the outside of the passing mould blocks (5) under heat transfer,
d) in the guide and/or temperature control surface device (8, 8i) of the guide and/or tempering body device (8, 8i), guide recesses having elevations and/or indentations (8nz, 8ne) and/or flat guide surfaces are formed, which interact with corresponding guide recesses (8nz, 8ne) and/or guide surfaces of the passing mould blocks (5), **characterised in that**
e) the guide and/or temperature control body device (8, 8i) is formed in such a way that the mould block pairs (5) passing through the moulding section (1f) and/or the mould blocks (5) passing through the return guide (1r) are at least partially covered on their outside, wherein the mould block pairs (5) or the mould blocks (5) preferably glide along in planar contact with the guide and/or temperature control body device (8, 8i),
wherein the mould block has toothed ridges formed inside in the body of the mould blocks, which do not laterally protrude beyond the base body of the mould blocks,
wherein the inward toothed ridges are formed on the outside of the mould blocks on the upper and lower region of the mould blocks.

2. Device according to claim 1,
**characterised in that**
the guiding and/or temperature control means channel device (8k) has parallel temperature control means channels (8k), which extend through the guide and/or temperature control body device (8, 8i).

3. Device according to one of the preceding claims,
**characterised in that**
the guide and/or temperature body device (8, 8i) is arranged in the moulding section (1f) on the upper outside of the passing mould block pairs (5) and on the lower outside of the passing mould block pairs (5) and on the one lateral outside and on the other lateral outside of the passing mould block pairs (5) and thus covers the passing mould block pairs (5) on four longitudinal sides.

4. Device according to one of the preceding claims,
**characterised in that**
the guide and/or temperature control body device (8, 8i) is arranged in the return guide (1r) of the mould blocks (5) on the upper outside of the mould blocks (5) and on the lower outside of the mould blocks (5) and is arranged on the lateral outside of the mould blocks (5), which is arranged facing away from the moulding surface (5f) of the respective mould blocks (5), i.e. only covers the mould blocks (5) on three sides.

5. Device according to one of the preceding claims,
**characterised in that**
the guide and/or temperature control body device (8) is formed from several guide and/or temperature control bodies (8i), which surround the passing mould block pairs on several sides.

6. Device according to one of the preceding claims,
**characterised in that**
a guide and/or temperature control body (8i) is arranged on the upper outside of the mould block pairs (5) passing through the moulding section, and/or
at least one guide and/or temperature control body (8i) is arranged on the lower outside of the mould block pairs (5) passing through the moulding section, and/or
a guide and/or temperature control body (8i) is arranged on the one lateral outside of the mould block pairs (5) passing through the moulding section, and/or
a guide and/or temperature control body (8i) is arranged on the other outside of the mould block pairs (5) passing through the moulding section.

7. Device according to one of the preceding claims,
**characterised in that**
the guide and/or temperature control body device (8) is formed from several guide and/or temperature control bodies (8i) arranged edge to edge axially one behind the other in the guide direction, and/or is formed from several guide and/or temperature control bodies (8i) arranged one next to the other transversely to the guide direction.

8. Device according to one of the preceding claims,
**characterised in that**
each guide and/or temperature control body (8i) on the side facing towards the passing mould blocks (5) and/or the passing mould block pairs (5) respectively has a guide and/or temperature control surface.

9. Device according to one of the preceding claims,
**characterised in that**
the guide and/or temperature control surface of the guide and/or tempering body (8i) has guide formations (8nz, 8ne), which are formed as guide elevations and/or guide depressions.

10. Device according to one of claims 2 to 9,
**characterised in that**
in each case at least one tempering means channel (8k) is formed in each guide and/or temperature control body (8i) of the guide and/or temperature control body device (8).

11. Device according to claim 10,
**characterised in that**
several parallel temperature control means channels (8k) are formed in the guide and/or temperature control body (8i).

12. Device according to one of claims 5 to 11,
**characterised in that**
axially adjacent guide and/or temperature control bodies (8i) are arranged edge to edge and have a coupling device (3), which has a temperature control means connection channel, via which the at least one temperature control means channel (8k) of the one guide and/or temperature control body (8i) is connectable to the at least one temperature control means channel (8k) of the other temperature control body (8i).

13. Device according to one of the preceding claims,
**characterised in that**
a vacuum device or a part of a vacuum device is arranged in the region of a guide and/or temperature control body (8i), which vacuum device is connected or connectable to an external vacuum supply, and formed on an attachment device of a vacuum channel device formed in the mould block (5), which vacuum channel device applies a vacuum to the moulding surface of the mould block (5) guided in the moulding section.

14. Device according to claim 13,
**characterised in that**
the vacuum device or the part of the vacuum device is formed to engage through the guide and/or temperature control body (8i) and/or is formed inside a guide and/or temperature control body (8i) and/or in a space between two guide and/or temperature control bodies (8i) abutting on each other and/or is formed abutting on a guide and/or temperature control body (8i).

15. Device according to claim 13 or 14,
**characterised in that**
the attachment device is arranged on the mould block (5) fixedly, formed as a gliding attachment device.

## Revendications

1. Dispositif (10) pour la fabrication de tuyaux en matière plastique (10), avec une extrudeuse (9) avec tête d'injection (9s) et une machine à onduler (1), dans laquelle, par l'intermédiaire de la tête d'injection (9s), une gaine en fonte de matière plastique est introduite pour le formage du tuyau en matière plastique (10), dans lequel il est prévu
que la machine à onduler (1) comprenne un trajet de formage (1f) dans laquelle des mâchoires de formage (5) sont guidées par paires dans la direction de la production,
que, dans une portion d'entrée (1e) de la machine à onduler (1), les mâchoires de formage (5) soient assemblées en paires de mâchoires de formage au début du trajet de formage (1f) et
que, dans une portion de sortie (1a) de la machine à onduler (1), les paires de mâchoires de formage soient détachées à partir de la fin du trajet de formage (1f) et
que, dans une portion intermédiaire (1z), disposée entre la portion d'entrée (1e) et la portion de sortie (1a), de la machine à onduler (5), le trajet de formage (1f) soit conçue pour le guidage des paires de mâchoires de formage et qu'au moins un retour (1r) soit prévu, dans lequel les mâchoires de formage (5) sont retournées de la fin du trajet de formage (1f) vers le début du trajet de formage (1f),
avec un dispositif de guidage fixe (6, 8, 8i) pour le guidage des mâchoires de formage (5) dans la section de formage et/ou dans le retour, dans lequel
a) le dispositif de guidage (6) comprend un dispositif à corps de guidage et/ou de régulation de température (8, 8i),
b) le dispositif à corps de guidage et/ou de régulation de température (8, 8i) comprend un dispositif à canal de fluide de régulation de température (8k) pouvant être traversé par un fluide de régulation de température,
c) le dispositif à corps de guidage et/ou de régulation de température (8, 8i) comprend un dispositif à surface de guidage et/ou de régulation de température, qui est orienté vers le côté externe des mâchoires de formage (5) correspondantes pour la transmission de chaleur,
d) dans le dispositif à surface de guidage et/ou de régulation de température (8, 8i) du dispositif à corps de guidage et/ou de régulation de température (8, 8i), sont réalisés des évidements de guidage et/ou des surfaces de guidage planes comprenant des bossages et/ou des creux (8nz, 8ne), qui interagissent avec des évidements de guidage (8nz, 8ne) et/ou des surfaces de guidage des mâchoires de formage (5) correspondantes, **caractérisé en ce que**
e) le dispositif à corps de guidage et/ou de régulation de température (8, 8i) est conçu de façon à ce que les paires de mâchoires de formage (5) correspondantes dans le trajet de formage (1f) et/ou les mâchoires de formage (5) correspondantes dans le retour (1r) soient au moins partiellement recouvertes au niveau de leur côté externe, dans lequel les paires de mâchoires de formage (5) respectivement les mâchoires de formage (5) glissent, de préférence en un contact plan avec le dispositif à corps de guidage et/ou de régulation de température (8, 8i),
dans lequel les mâchoires de formage comprennent, à l'intérieur, des crémaillères réalisées dans le corps des mâchoires de formage, qui ne dépassent pas latéralement du corps de base des mâchoires de formage, dans lequel, les crémaillères internes sont réalisées sur le côté externe des mâchoires de formage, sur les parties supérieure et inférieure des mâchoires de formage.

2. Dispositif selon la revendication 1,
**caractérisé en ce que**
le dispositif à canal de fluide de régulation de température (8k) comprend des canaux de fluide de régulation de température parallèles (8k) qui s'étendent à travers le dispositif à corps de guidage et/ou de régulation de température (8, 8i).

3. Dispositif selon l'une des revendications précédentes,
**caractérisé en ce que**
le dispositif à corps de guidage et/ou de régulation de température (8, 8i) est disposé dans le trajet de formage (1f) au niveau du côté externe supérieur des paires de mâchoires de formage (5) correspondantes et au niveau du côté externe inférieur des paires de mâchoires de formage (5) correspondantes et au niveau d'un côté externe latéral et au niveau de l'autre côté externe latéral des paires de mâchoires de formage (5) et recouvre ainsi les paires de mâchoires de formage (5) correspondantes au niveau de quatre côtés longitudinaux.

4. Dispositif selon l'une des revendications précédentes,
**caractérisé en ce que**
le dispositif à corps de guidage et/ou de régulation de température (8, 8i) est disposé dans le retour (1r) des mâchoires de formage (5) au niveau du côté externe supérieur des mâchoires de formage (5) et au niveau du côté externe inférieur des mâchoires de formage (5) et est disposé au niveau du côté externe latéral des mâchoires de formage (5), qui est disposé de manière opposée à la surface de formage (5f) des mâchoires de formage (5) respectives, c'est-à-dire qu'il ne recouvre les mâchoires de formage (5) que sur trois côtés.

5. Dispositif selon l'une des revendications précédentes,
**caractérisé en ce que**
le dispositif à corps de guidage et/ou de régulation de température (8) est constitué de plusieurs corps de guidage et/ou de régulation de température (8i) qui entourent les paires de mâchoires de formage correspondantes sur plusieurs côtés.

6. Dispositif selon l'une des revendications précédentes,
**caractérisé en ce que**
sur le côté externe supérieur des paires de mâchoires de formage (5) correspondantes dans la section de formage, est disposé un corps de guidage et/ou de régulation de température (8i) et/ou
au niveau du côté externe supérieur des paires de mâchoires de formage (5) correspondantes dans la section de formage, est disposé au moins un corps de guidage et/ou de régulation de température (8i) et/ou
au niveau du côté externe latéral des paires de mâchoires de formage (5) correspondantes dans la section de formage, est disposé un corps de guidage et/ou de régulation de température (8i) et/ou
au niveau de l'autre côté externe des paires de mâchoires de formage (5) correspondantes dans la section de formage, est disposé un corps de guidage et/ou de régulation de température (8i).

7. Dispositif selon l'une des revendications précédentes,
**caractérisé en ce que**
le dispositif à corps de guidage et/ou de régulation de température (8) est constitué de plusieurs corps de guidage et/ou de régulation de température (8i) disposés axialement bout à bout les uns derrière les autres dans la direction de guidage et/ou de plusieurs corps de guidage et/ou de régulation de température (8i) disposés les uns à côté des autres transversalement par rapport à la direction de guidage.

8. Dispositif selon l'une des revendications précédentes,
**caractérisé en ce que**
chaque corps de guidage et/ou de régulation de température (8i) comprend, sur chaque côté orienté vers les mâchoires de formage (5) correspondantes et/ou vers les paires de mâchoires de formage (5) correspondantes, une surface de guidage et/ou de régulation de température.

9. Dispositif selon l'une des revendications précédentes,
**caractérisé en ce que**
la surface de guidage et/ou de régulation de température des corps de guidage et/ou de régulation de température (8i) comprend des déformations de guidage (8nz, 8ne) qui sont conçues comme des bossages de guidage et/ou des creux de guidage.

10. Dispositif selon l'une des revendications 2 à 9,
**caractérisé en ce que**
dans chaque corps de guidage et/ou de régulation de température (8i) du dispositif à corps de guidage et/ou de régulation de température (8), est prévu au moins un canal de fluide de régulation de température (8k).

11. Dispositif selon la revendication 10,
**caractérisé en ce que**
dans le corps de guidage et/ou de régulation de température (8i) sont prévus plusieurs canaux de fluide de régulation de température (8k) parallèles.

12. Dispositif selon l'une des revendications 5 à 11,
**caractérisé en ce que**
les corps de guidage et/ou de régulation de température (8i) adjacents axialement sont disposés bout à bout et comprennent un dispositif de couplage (3) qui comprend un canal de liaison de fluide de régulation de température par l'intermédiaire duquel l'au moins un canal de fluide de régulation de température (8k) d'un corps de guidage et/ou de régulation de température (8i) peut être relié avec l'au moins un canal de fluide de régulation de température (8k) d'un autre corps de régulation de température (8i).

13. Dispositif selon l'une des revendications précédentes,
**caractérisé en ce que**
au niveau d'un corps de guidage et/ou de régulation de température (8i), est disposé un dispositif de vide ou une partie d'un dispositif de vide, qui est relié ou qui peut être relié avec une alimentation de vide externe, et, au niveau d'un dispositif de connexion, est prévu un dispositif à canal de vide réalisé dans la mâchoire de formage (5), qui alimente en vide la surface de formage de la mâchoire de formage (5) guidée dans la section de formage.

14. Dispositif selon la revendication 13,
**caractérisé en ce que**
le dispositif de vide ou la partie du dispositif de vide est conçu de façon à traverser le corps de guidage et/ou de régulation de température (8i) et/ou est disposé à l'intérieur d'un corps de guidage et/ou de régulation de température (8i) et/ou est disposé dans un espace intermédiaire entre deux corps de guidage et/ou de régulation de température (8i) adjacents entre eux et/ou est disposé de manière adjacente à un corps de guidage et/ou de régulation de température (8i).

15. Dispositif selon la revendication 13 ou 14,
**caractérisé en ce que**
le dispositif de connexion est disposé de manière fixe sur la mâchoire de formage (5) et il est conçu comme un dispositif de connexion coulissant.
